# EUROPEAN PATENT SPECIFICATION

(11) **EP 1 613 191 B1**
(45) Date of publication and mention of the grant of the patent: **31.01.2007**
(21) Application number: 04722258.3
(22) Date of filing: 22.03.2004
(51) Int. Cl.: A47C 1/032

(54) **DEVICE FOR ADJUSTING THE DEGREE OF PRELOAD OF THE SPRINGS IN OFFICE CHAIR MECHANISMS**
VORRICHTUNG ZUR VERSTELLUNG DER VORSPANNUNG DER FEDERN EINES BÜROSTUHLMECHANISMUS
DISPOSITIF PERMETTANT DE REGLER LE DEGRE DE PRECONTRAINTE DES RESSORTS DANS LES MECANISMES DE CHAISES DE BUREAU

(30) Priority: 10.04.2003 IT VE20030014
(43) Date of publication of application: 11.01.2006
(73) Proprietor: Imarc S.p.A., 36028 Rossano Veneto (IT)
(72) Inventor: LIVIERO, Stefano, I-36028 Rossano Veneto (IT)
(74) Representative: Piovesana, Paolo
(86) International application number: PCT/EP2004/002975
(87) International publication number: WO 2004/089163

(56) References cited:
- CA-C- 2 019 521
- US-A- 4 889 384
- US-A- 5 116 016
- US-A- 5 207 479

## Description

This invention relates to a device for adjusting the degree of preload of the springs in office chair mechanisms. A device for adjusting the preload of a spring in an automative seat is known from US 5,116,016.

Devices for adjusting the degree of preload of the springs in office chair mechanisms are known, consisting of a knob acting on a stern disposed in the spring interior.

A drawback of this system is the fact that, given the vertical position of the spring below the box structure supporting the seating portion, there is a certain difficulty in operating the mechanism.

To obviate this drawback, solutions have been proposed in which the mechanism is situated in a lateral horizontal position so that mechanical means can be used to adjust the degree of compression of the spring.

This solution presents however the drawback of being usable only on chairs of new design, and cannot be applied to mechanisms already available commercially.

An object of the invention is to eliminate this drawback by providing an adjustment system able to preload the springs in office chair mechanisms, which can be mounted on commercially available box structures.

This and further objects which will be apparent from the ensuing description are attained according to the invention by a device for adjusting the degree of preload of springs in office chair mechanisms as described in claim 1.

A preferred embodiment of the present invention is described in detail hereinafter with reference to the accompanying drawings, in which:

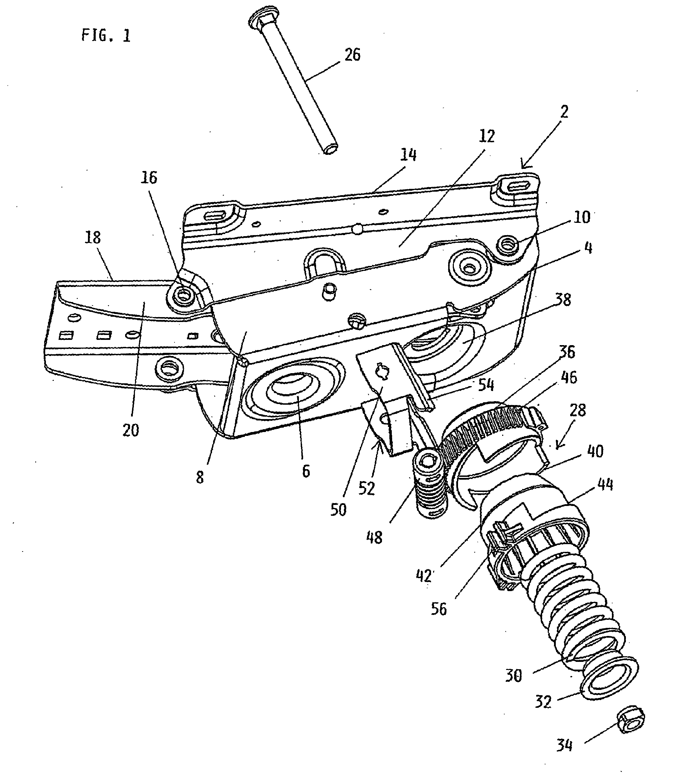

- Figure 1: is an exploded perspective view of the adjustment device of the invention applied to a box structure,

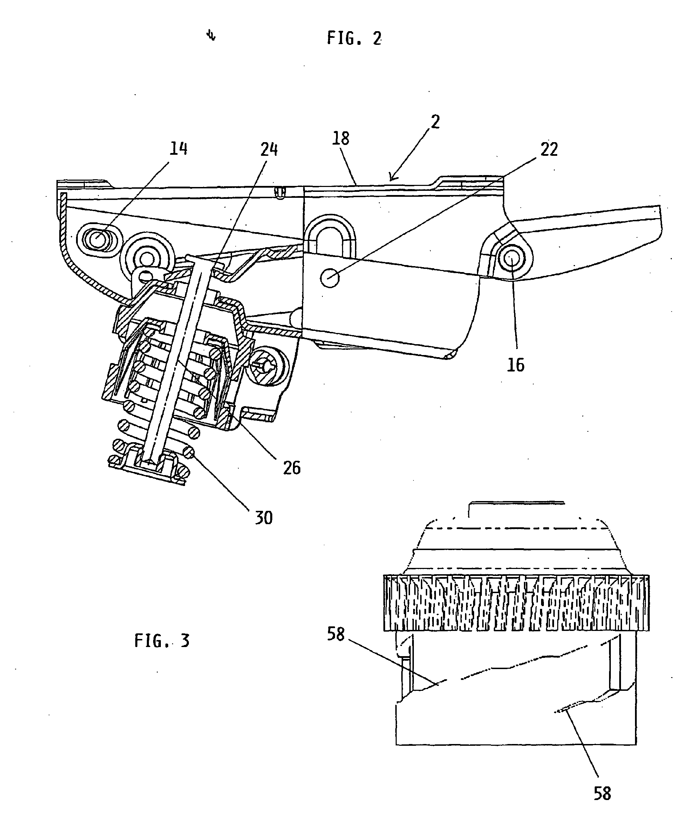

- Figure 2: shows it in longitudinal section in its assembled configuration, and
- Figure 3: shows a variant thereof.

As can be seen from the figures, the adjustment device of the invention is applied to a swivel support indicated overall by 2 comprising a fixed box structure 4 provided lowerly with a frusto-conical bush for the insertion of the upper end of the stem of a traditional gas spring (not shown in the drawings), the purpose of which is to support the swivel support on a resting base and at the same time to adjust the height of the seating portion.

The flanges 12 of a plate 14 supporting a seating portion (not shown in the drawings) are hinged, about a tubular shaft 10, to the longitudinal walls 8 of said box structure, said flanges 12 also being hinged about another transverse shaft 16 to an elongate plate 18 for supporting the back-rest (not shown in the drawings) which in its turn is hinged by its flanges 20 to the longitudinal walls 8 of the box structure about a transverse pin 22.

The surface of the plate 18 comprises a seat provided with a hole 24 in which there engages a pull rod 26 inserted into the adjustment device indicated overall by 28.

The device comprises a double-bodied socket, housing in its interior a coil spring 30 concentric with the pull rod and resting with its free end on a plug 32 in which the head of a nut engaging the threaded end of the pull rod rests.

Specifically, the adjustment device comprises a first socket 36, the base of which is inserted in a seat 38 provided in the base of the box structure, and of which the free edge 40 of its lateral surface extends helically at 44.

In the interior of the first socket there is inserted a second socket 42 the outer lateral surface of which comprises a helical rib cooperating with the free edge of the first socket.

In addition, the outer lateral surface of the first socket 36 comprises a rack portion 46 in which there engages a worm 48 provided with an operating knob (not show in the drawings) which is secured to the parallel arms 50 of a U bracket 52 rigid with the base of the box structure.

The parallel arms 50 are provided with two lips 54 which engage between the prongs of two forks 56 provided on the outer lateral surface of the second socket 42.

The device of the invention operates in the following manner:
in the absence of external stresses, for example when the user is not seated on the chair, the spring 30 maintains the box structure and hence the support plate 14, and the plate 18 hinged to it, in a virtually advanced chair position.

This configuration is made stable exclusively by the counteracting effect due to the spring 30. When the user is seated on the chair, the user's weight acts as a lever against the back-rest to modify the compression undergone by the spring.

When in that configuration the back-rest and the seating portion can be freely inclined rearwards by the effect of the thrust of the user seated on the seat, and forwards by decreasing this thrust by a sufficient extent to enable the spring to exert its elastic reaction.

As the weight of the user varies, the intensity of the force required to overcome the spring also varies, and for this reason the device is able to adjust the reaction of this spring, by adjusting its preload.

In this respect, by acting on the operating knob of the worm 48 the first socket 36 is made to rotate axially, so that by virtue of the rotation of its helical walls it causes withdrawal or approach of the second socket 42 which, having its forks 56 engaged by the lips 54 on the support, can move only with translational movement. Consequently the spring is made to compress or expand as a result of the travel in one direction or the other of the second socket, on the base of which there rests one end of the spring.

From the aforegoing it is apparent that the device of the invention presents numerous advantages, and in particular:
- it can be applied to already existing box structures while at the same time enabling the degree of preload to be adjusted in a simple and comfortable manner,
- it presents constructional simplicity as it uses only two plastic pieces which are of low cost, self-centering and self-guided,
- it presents reliability and safety in operation,
- it enables the degree of preload to be varied with reduced adjustment force,
- it enables simple moulds to be used which do not require the presence of threads.

In the embodiment shown in Figure 3 the helical surfaces of the first and second element comprise portions with a stepped profile 58.

In a further variant, not shown in the drawings, the helical surfaces of the first element comprise a plurality of hollows in which corresponding appendices provided on the second element engage.

These embodiments have the advantage of maintaining the preload adjustment configuration stable without using irreversible operating means such as worms.

## Claims

1. A device for adjusting the degree of preload of springs in office chair mechanisms which comprise at least first and second parts (2) hinged together, and elastic means (30) maintaining said first and second parts elastically spaced apart, said device being **characterised by** comprising:
- a first element (36) provided with at least one inclined surface extending helically,
- a second element (42) provided with at least one inclined surface extending helically and interacting with the inclined surface of the first element,
- means (46,48) for inducing axial rotation of one of said two elements,
- means (54,56) for blocking the rotation of the other of said two elements said first (36) and second (42) elements being coupled to one of the part (2) and to the elastic means (30).

2. A device as claimed in claim 1, **characterised in that** the means for inducing axial rotation consists of a linkage perpendicular to the axis of rotation.

3. A device as claimed in claim 1, **characterised in that** the means for inducing axial rotation consists of a worm engaging a toothing provided on one of two elements.

4. A device as claimed in claim 1, **characterised in that** the means for inducing axial rotation consists of a pinion engaging a ring gear provided on one of the two elements.

## Patentansprüche

1. Vorrichtung zum Einstellen des Vorbelastungsgrades von Federn in Bürostuhlmechanismen, die wenigstens einen ersten Teil und einen zweiten Teil (2), die aneinander angelenkt sind, und elastische Mittel (30), die den ersten und den zweiten Teil elastisch voneinander beabstandet halten, umfassen, wobei die Vorrichtung **dadurch gekennzeichnet, ist, dass** sie umfasst:
- ein erstes Element (36), das mit wenigstens einer geneigten Oberfläche versehen ist, die schraubenlinienförmig verläuft,
- ein zweites Element (42), das mit wenigstens einer geneigten Oberfläche versehen ist, die schraubenlinienförmig verläuft und mit der geneigten Oberfläche des ersten Elements in Wechselwirkung steht,
- Mittel (46, 48), um eine axiale Drehung eines der zwei Elemente hervorzurufen,
- Mittel (54, 56), um die Drehung des anderen der beiden Elemente zu blockieren,
wobei das erste Element (36) und das zweite Element (42) mit einem der Teile (2) oder mit den elastischen Mitteln (30) gekoppelt sind.

2. Vorrichtung nach Anspruch 1, **dadurch gekennzeichnet, dass** die Mittel zum Hervorrufen einer axialen Drehung aus einem Gestänge senkrecht zur Drehachse bestehen.

3. Vorrichtung nach Anspruch 1, **dadurch gekennzeichnet, dass** die Mittel zum Hervorrufen einer axialen Drehung aus einer Schnecke, die mit einer an einem der zwei Elemente vorgesehenen Zahnung in Eingriff ist, bestehen.

4. Vorrichtung nach Anspruch 1, **dadurch gekennzeichnet, dass** die Mittel zum Hervorrufen einer axialen Drehung aus einem Ritzel, das mit einem an einem der beiden Elemente vorgesehenen Hohlrad in Eingriff ist, bestehen.

## Revendications

1. Dispositif pour régler le degré de précontrainte de ressorts dans des mécanismes de chaise de bureau, qui comprennent au moins des première et deuxième parties (2) articulées ensemble, et un moyen élastique (30) maintenant lesdites première et deuxième parties espacées élastiquement, ledit dispositif étant **caractérisé en ce qu'**il comprend :
- un premier élément (36) muni d'au moins une surface inclinée s'étendant hélicoïdalement,
- un deuxième élément (42) muni d'au moins une surface inclinée s'étendant hélicoïdalement et coopérant avec la surface inclinée du premier élément,
- un moyen (46, 48) pour provoquer la rotation axiale de l'un desdits deux éléments,
- un moyen (54, 56) pour bloquer la rotation de l'autre desdits deux éléments,
lesdits premier (36) et deuxième (42) éléments étant couplés à l'une des parties (2) et au moyen élastique (30).

2. Dispositif comme revendiqué dans la revendication 1, **caractérisé en ce que** le moyen pour provoquer la rotation axiale consiste en une liaison perpendiculaire de l'axe de rotation.

3. Dispositif comme revendiqué dans la revendication 1, **caractérisé en ce que** le moyen pour provoquer la rotation axiale consiste en une vis sans fin s'engrenant dans une denture prévue sur l'un des deux éléments.

4. Dispositif comme revendiqué dans la revendication 1, **caractérisé en ce que** le moyen pour provoquer la rotation axiale consiste en un pignon s'engrenant dans une couronne d'engrenage prévue sur l'un des deux éléments.
